# EUROPEAN PATENT SPECIFICATION

(11) **EP 1 557 389 B1**
(45) Date of publication and mention of the grant of the patent: **26.07.2006**
(21) Application number: 02740771.7
(22) Date of filing: 13.06.2002
(51) Int. Cl.: B65H 75/42, B65H 75/44, H02G 11/02

(54) **AUTOMATIC WINDING DEVICE FOR AN EXTENDABLE TUBE**
AUTOMATISCHE WICKELVORRICHTUNG F R EIN AUSZIEHBARES ROHR
DISPOSITIF D'ENROULEMENT AUTOMATIQUE D'UN TUYAU EXTENSIBLE

(43) Date of publication of application: 27.07.2005
(73) Proprietor: Electrodomesticos Taurus S.L., 25790 Oliana (Lleida) (ES)
(72) Inventor: TORREGASA PRAT, Jose, E-25790 Oliana (ES); TRENCH ROCA, Luis, E-08650 Sallent (ES)
(74) Representative: Manresa Val, Manuel
(86) International application number: PCT/ES2002/000294
(87) International publication number: WO 2003/106318

(56) References cited:
- ES-A1- 2 156 717
- US-A- 4 008 791
- US-A- 5 332 171

## Description

### State of the art

The present invention relates to an automatic winding device for an extendable tube, including this tube at least an electrical cable and at least one fluid pipe, gaseous or liquid, being applicable in general to a portable apparatus that requires an electrical power supply connection or fluid supply connection, as a steam iron or certain apparatuses used in dentistry. The device is of the type that permits the extension of the extendable tube by means of a tractive force produced on the same one and later its automatic collection, being able to be extracted any portion of the tube between zero, in its state of maximum collection, and the maximum extractable length, in a stable way (see for example document US-A-4008791).

### Backgrounds of the invention.

It is known automatic winding devices of electrical cable in which a visible electrical cable is winded in a first elastically loaded reel, being this visible cable extendable by uncoiled under the action of a manual tractive force exerted on the same one. This visible cable is associated with a hidden electrical cable in the device, coiled in a second reel, coaxial and shared in common with the first one, whose hidden cable is compressible and expansionable by coiled and uncoiled, respectively, of the second reel. The visible and hidden cables are electrically connected to each other by their inner ends to the device, so that it is avoided the presence of revolving contacts of brushes or similar. For the reception and guidance of the mentioned electrical cables in their evolutions it is foreseen a disc-shaped surfaces limiting some spaces around a nucleus. An edge or perimetral wall of one of said disc-shaped surfaces, which is fixed, together with another movable disc-shaped surface forms a housing for the evolution of the hidden cable. The connection between the visible cable and the hidden cable and the accesses of said cables to their corresponding winding zones takes place by means of a strip or similar ready in the nucleus.

The automatic recovery of the visible cable is carried out by means of the arrangement of elastic means, such as a spiral spring fixed by an end in the central nucleus. The device has a fixed support with a disc-shaped surface which has in its periphery means for connecting a shell piece with a central protuberance that, as male pivot, guides the assembly of the device.

In the following patents CH-A-137049, US-A-4053118, USA-A-5094396 and EP-A-1038821 devices of this type are described.

Nevertheless, none of said mentioned backgrounds foreseen that the mentioned extendable cable includes, in addition to a power electrical conductor element, another fluid pipe, for fluids in liquid or gaseous state.

Some electrical devices use, in addition to the electrical energy, a fluid, as for example the steam irons, steam cloning devices, electropneumatic tools, dentistry and/or surgery devices, etc. In said cases the electric/fluid apparatus is connected to a feeding base through an only extendable tube composed of a conductive cable of electrical energy and one or more tubes of fluid conduction.

Therefore, there is a necessity to have an automatic winding device to this type of tubes.

The closest prior art is the US Patent US4008791, in the name of Cascade Corporation, of the year 1975, that refers to a takeup reel for a combination hydraulic hose and electrical cable including a rotatable storage portion for taking up and paying out hose and cable, a stationary mounting member on which the storage portion is mounted for rotation, and a rotatable connector providing a fluid connection between hose stored on the storage portion and a supply of hydraulic fluid external to the reel. A brushless electrical connection is provided between cable stored on the storage portion and a supply of electrical energy external to the reel by an interface cable which may be coiled in either of reverse directions about the axis of rotation for the storage portion. A cable housing for the interface cable is joined to the storage portion for rotation therewith. The interface cable includes a plurality of flexible conductor elements. The elements in that portion of the interface cable stored in the cable housing are joined in side-by-side relation to form a flat ribbon-like configuration, and in another portion of the cable the elements are unjoined to form a loose bundle. The unjoined portions of the elements extend through a passage generally parallel to the rotational axis for the line storing portion. The ribbon-like portion of the cable extends radially into the cable housing through a strain relief guide which is mounted for limited rotation about an axis substantially paralleling the rotational axis of the line-storing portion, thus to guide a stretch of the joined cable elements in either of opposite spirally wound directions.

### Brief description of the invention

The present invention satisfies the previous necessity, contributing an automatic winding device with an extendable tube composed of an electrical cable and one or more flexible tubular conductions capable of leading one or more fluids, in liquid or in gaseous state, in which the electrical cable, that is at least one, and the tubular conduction, that is at least one, are suitably isolated to each other and are covered of a common protective coating. The device permits the manual extension of this extendable tube and its later automatic coiled.

Said tube is coiled on a first reel, elastically loaded by a spring, in such a way that in order to unroll it is necessary to apply a tractive force on the end of said tube against the force of said spring. The integrated electrical cable in the extendable tube, which is extendable by uncoiled, is associated to a hidden electrical cable in the inside of the device, which is compressible and expansionable by coiled and uncoiled on a second coaxial reel and shared in common to the first reel. The inner ends of said hidden electrical cable and the electrical cable of the extendable tube are electrically connected to each and fixed to a point close to the spin axis, in an inner space of the nucleus of one of the revolving reels.

The reel or the revolving support of the extendable tube is constituted by two separated and coupled to each other disc-shaped panels by means of a cylindrical and concentric wall with the rotation axis, that arranges with this a volume or nucleus where the fluid and electrical connections of the extendable tube with an existing cavity in the rotation axis and with the hidden electrical cable respectively, are located. This nucleus arranges, along with the faced lateral surfaces of the panels, a zone as a flattened reel that houses and guides the extendable tube in its evolutions.

On the other hand, the support of the hidden electrical cable is constituted by two separated disc-shaped planes, a movable plane, constituted by the opposite face of one of the disc-shaped panels of the revolving reel of the extendable tube and another fixed plane, constituted by a fixed panel. Both panels have bent towards inside perimetral edges, faced by their edges, that guarantee the housing of the hidden cable in their evolutions. The mentioned fixed panel is joined by means of outer columns to a fixed cover, located in front of the other face of said revolving reel. The fixed panel and the mentioned cover arranges two opposed faces of a housing that holds and guides some configurations performing like an axis on which it turns the revolving set formed by the reel of the tube and the semireel of the hidden electrical cable, sandwiched.

In a zone of one of the revolving panels corresponding to the inner part of the nucleus it is located the mentioned point of fixation and electrical connection of the inner ends of the electrical cable of the extendable tube and the hidden electrical cable, whereas the outer end of the hidden electrical cable is joint to a peripheral point of this plane of fixed support.

The fluid connection is made, in the case of incorporating an only flexible tube of fluid conduction, through a coaxial annular chamber to the spin axis of the reel, with whose chamber communicates by one side the flexible tube of the extendable tube and by the other side an external tube of fluid conduction of fixed installation. For this purpose, the mentioned chamber is formed between a hollow protuberance, shared in common to an inner face of the cover and that centrally extends towards the inner part of a coaxial cavity shared in common to the reel. The mentioned protuberance works as spin axis and as guide for the assembly of the device and in addition, the hollow of the mentioned protuberance is communicated, through the cover, with a connection tenon to the mentioned outer fluid pipe. Orifices radially located in the wall of this protuberance communicate their hollow inner part with the annular chamber, which communicates as well through a passage with a connection tenon to the inner end to the mentioned tubular conduction integrated in the composed extendable tube. This cavity is housed and turns on said protuberance, being foreseen between the same fitted zones for a correct guidance. In one of the fitted zones watertightness means are foreseen that define the mentioned annular chamber which is formed by a zone in which the inner diameter of the cavity is substantially higher than the outer diameter of the protuberance.

In the case of including two of said flexible fluid pipes, the mentioned protuberance includes two of said hollow inner zones, independents, which are communicated by their axial ends, through covers or fixed panels of opposite sides, with respective first and second connection tenons to respective outer fluid pipes. Respective orifices, arranged radially in the wall of this protuberance, communicate their inner hollows with the respective annular chambers which communicate as well, through respective passages, with corresponding connection tenons to the inner ends of the mentioned flexible tubes integrated in the composed extendable tube.

The mentioned protuberance, which is shared in common with the cover, is located in the geometric centre of the same one and arranges, near the cover, a zone of coupling to an end of the mentioned spring of automatic coiled, whose another end is fixed to the reel.

The fixed part that defines the annular chamber, that is at least one, comprises a protuberance, shared in common of the mentioned second fixed panel and which it extends towards the inner part of the device coaxially to the spin axis of the double reel, whose protuberance has a hollow inner part with an axial opening in its end of union to the second fixed panel where is connected with the mentioned fixed connection sleeve, and orifices radially in a sidewall of the protuberance that communicate the mentioned hollow inner part with the annular chamber, whereas said movable part that defines the annular chamber comprises a cavity shared in common to one of said first or second disc-shaped panels and coaxial to the spin axis of the double reel, being said cavity provided with an orifice in a sidewall of the same one connected the mentioned connection sleeve movable in order to communicate the same one with the annular chamber, whose cavity is coupled and turns on said protuberance.

With this arrangement is possible to have an automatic winding for, for example, the feeding tube of an electrical steam panel, an steam cleaning apparatus, tool-machines, surgery and/or dentistry devices, being this tube composed by an electrical feeding cable and one or more feeder fluid pipes, liquid or gaseous, something that until the moment was not possible with the devices of the state of the art in which it is only possible to coil the electrical connection cable.

### Brief explanation of the drawings

In order to facilitate the comprehension of the present invention it is described an example of an embodiment making reference to the drawings that are enclosed. In the drawings:
fig 1 is a perspective exploded view of the automatic winding device for an extendable tube with an electrical feeder and a tube of feeding of fluid, according to an example of embodiment of the present invention;
fig 2 is a cross-sectional section view of the automatic winding device of fig 1, once assembled its component elements;
fig 3 is a plant view, and partially in section, a detail of the inner volume of the revolving support of the fig 1, in which it is shown the inner connections, fluid and electric, of the device;
fig 4 is a schematic perspective view of a housing that includes the winding device of the present invention; and
fig 5 is a similar cross-sectional view similar to the one of fig 2 but with an extendable tube that includes an electrical feeder and two tubes of feeding of fluids, according to another example of embodiment of the present invention.

### Detailed description of the embodiments

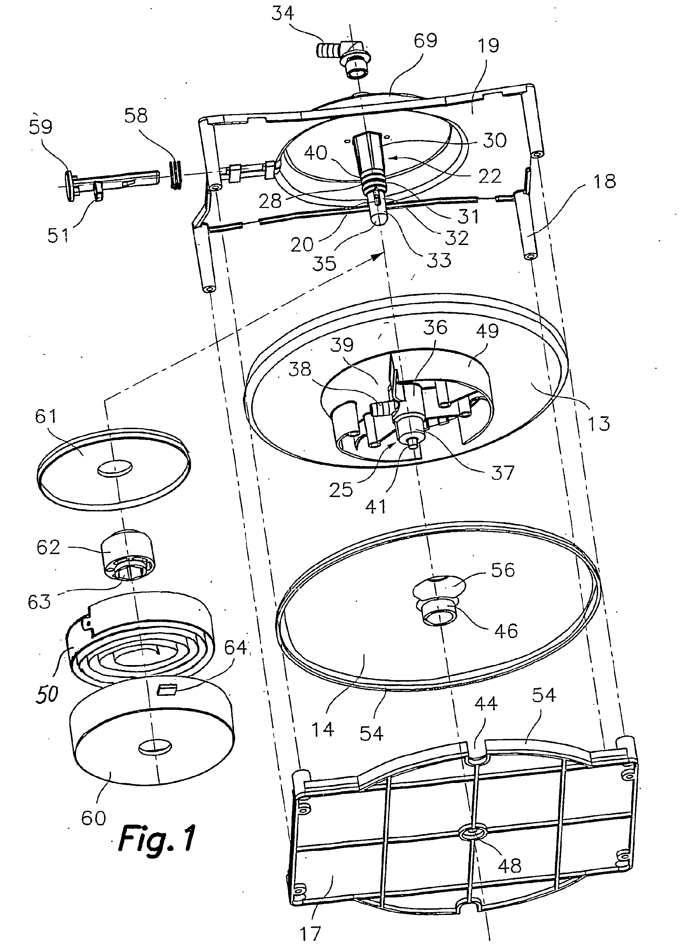

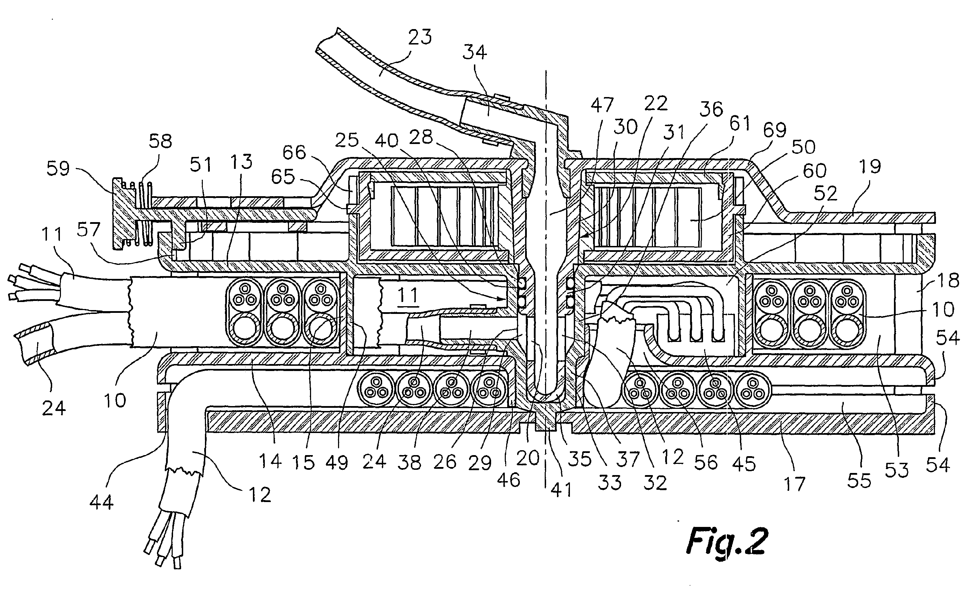

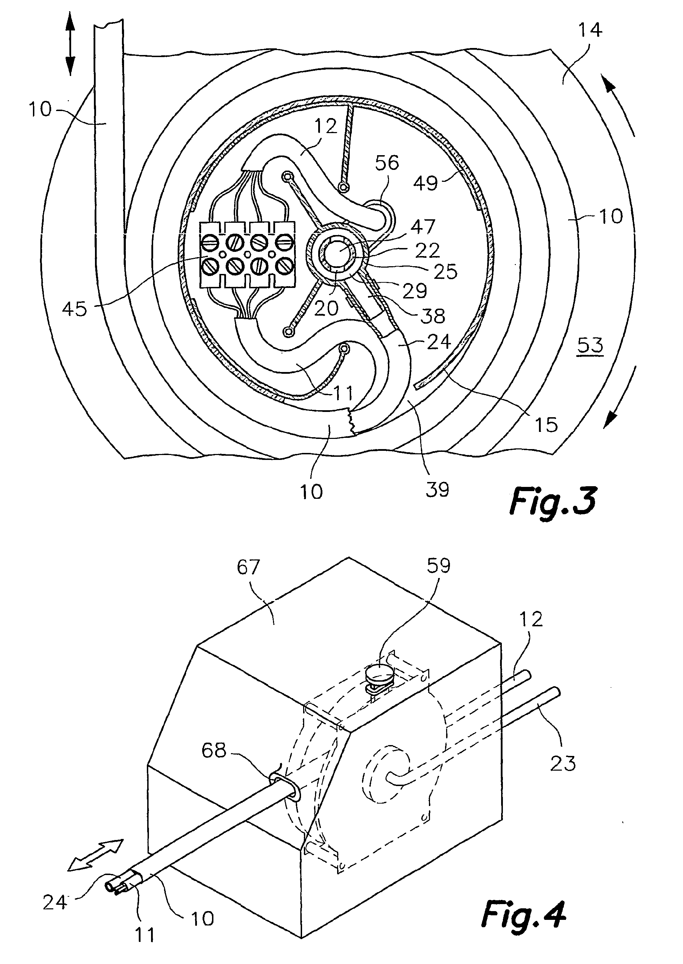

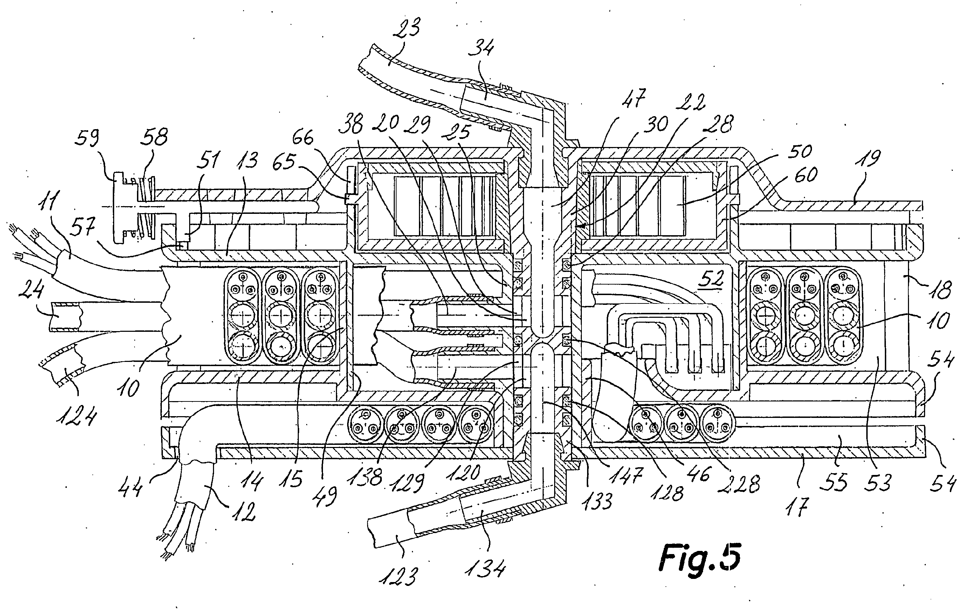

Referring to figures 1, 2 and 3, the winding device in accordance with an example of embodiment of the present invention is adapted for the automatic coiled for an extendable tube (10) (shown in cross-sectional section in fig 2) which is composed by a flexible electrical cable 11 and a flexible fluid pipe 24, both properly isolated to each other and covered externally by a common protective coating. The electrical cable can be single-pole or multipolar. For example, in the Figs. 2 and 5 is shown a tri-pole or three conductors electrical cable, whereas in fig 3 is shown a tetra-pole or four conductors electrical cable.

For this purpose the device comprises a double revolving reel, elastically loaded by a spiral spring (fig 2), whose reel can turn between two fixed panels 17,19 arranged to each other by means of several columns 18 located in their ends. The revolving reel comprises a first compartment 53 for said extendable tube 10, which is defined by a cylindrical wall 15 as a nucleus and some faced faces from a first and a second disc-shaped panels 13,14, parallels to each other, and a second compartment 55 for a hidden electrical cable 12, also flexible, defined by a cylindrical nucleus 46, coaxial to the cylindrical wall 15, an opposed face of the mentioned second disc-shaped panel 14 and a face faced of said first fixed panel 17. See that the compartment 55 where the hidden cable evolves has movable the nucleus and a sidewall, that is to say, the set formed by the cylindrical nucleus 46 and the second disc-shaped panel 14, and a fixed sidewall, that is to say, the one is formed by the first fixed panel 17.

In a known way, the inner ends of the electrical cable 11 of the extendable tube 10 and the hidden electrical cable 12 are electrically connected to each other and mechanically fixed to a point of fixation 45 close to the spin axis of said double reel whereas an outer end of said hidden cable 12 is mechanically fixed to a peripheral point 44 of said fixed panel 17. This allows the manual extension of said tube 10, turning the reel against the elastic force of mentioned spiral spring 50, and its later automatic coiled by turn of the mentioned double reel driven forward by said means 50 while it takes place a compression and expansion of the hidden cable 12 within the second compartment 55 of said reel, and all of it while the mentioned electrical connection between both cables 11,12 is.

The device simultaneously carries out a fluid connection between the inner end of the flexible fluid pipe 24, integrated in said tube 10, and an outer fluid pipe 23. For this purpose, as it is shown in fig 2, a central zone of the mentioned double reel, and coaxially to the spin axis of the same one, it is defined an annular chamber 29 innerly defined on the one hand fixed, shared in common of said fixed panel 17, and externally by movable, shared in common to the disc-shaped panel 13, which, as it has been described more above, is a part of the double reel. This annular chamber 29 communicates through a connection sleeve 38, shared in common to the movable part, with an inner end of this flexible fluid pipe 24 integrated in the tube 10 and through a connection sleeve 34, shared in common to the fixed part, with an outer fluid pipe 23.

The mentioned fixed part comprises a protuberance 22, which starts from the mentioned second fixed panel 19 and it extends towards the inner part of the movable part, coaxially to the spin axis of the double reel. This protuberance 22 has a hollow inner part 47 with an axial opening in its joint end to the second fixed panel 19 connected with the mentioned fixed connection sleeve 34, to which the outer fluid pipe 23 is connected. In a section of a sidewall of protuberance 22 orifices 20 are arranged that they communicate the mentioned inner hollow 47 with the annular chamber 29. On the other hand, the mentioned movable part that defines externally the annular chamber 29 comprises a cavity 25, shared in common to the second panel 13, and provided with an orifice 26 in a sidewall of the same one connected to the mentioned connection sleeve 38, which is movable along with the cavity 25 and the reel and which connects the inner end of the tube 24 of the extendable tube 10. Thus, the mentioned orifice 26 communicates the tube 24 with the annular chamber 29. Cavity 25 is coupled and turns on said protuberance 22, which acts as a spin axis, with the position of means of the annular joint members 28. It will be observed, then, that there is a fluid communication between the outer fluid pipe 23 and the fluid pipe 24 of the extendable tube 10 through the annular chamber 29 and the hollow inner part 47 of the protuberance 22, that does not prevent the free turn of the reel and that does not affect the described above permanent electrical connection.

The mentioned protuberance 22 comprises, throughout its length, and from the fixed panel 19, different zones of decreasing diameters, that are housed in corresponding zones of the cavity 25. In the fig. 1 is shown separately the protuberance 22 and cavity 25 and in fig 2 they are assembled. The initial zone of the protuberance 22 is a zone of coupling 30, not housed in the cavity 25, for the fixation of a spiral spring 50 in charge of the mentioned elastic load for the automatic coiled, the assembly of which will be described later. There is a zone of watertightness 31, the outer diameter of which fits to the inner diameter of a corresponding zone 36 of the cavity 25, and between them there are the mentioned watertightness means, which are formed, for example,
by some annular joint members 28, of appropriate section, housed in annular grooves 40 formed in said zone of watertightness 31 of the protuberance 22, whose annular joint members 28 project or stand out said annular grooves 40 to altogether make contact in the wall of the opposed zone determining a watertight closing of the annular chamber 29. Next there is a third zone or chamber zone 32, which diameter is substantially smaller than the one of a corresponding zone 37 of the cavity 25, so that between them the annular chamber 29 is formed. In said chamber zone 32 of the protuberance 22 are located the mentioned orifices 20, and in the zone 36 of the cavity 25 it is the mentioned orifice 26. It is necessary to point out that, although in the described example the zone 36 of the cavity 25 has a constant diameter and includes the corresponding zones to the zones 31 and 32 of the protuberance 22, said zone 36 could have two sections of decreasing diameters whenever first fit to the zone of watertightness 31 and the second had a sufficient room to form the annular camera 29 with the chamber zone 32. Finally, the protuberance 22 comprises a final support zone 33, of outer diameter fitted to the inner diameter of a final zone 37 corresponding to the cavity 25. Said final support zone 33 of protuberance 22 has a configuration in hemispheric cap-shape 35 that adapts and supports in a blind bottom of the mentioned final zone 37 of the cavity 25. In the outer part of the blind bottom of the cavity 25 a pivot 41 is formed, coaxial with the spin axis of reel, whose pivot 41 houses in a corresponding hole 48 of the mentioned fixed panel 17 acting as a guide of the turn of the reel.

The first disc-shaped panel 13, in addition to the cavity 25, includes a cylindrical wall 49 that innerly fits in the mentioned cylindrical wall 15 as a nucleus, which is shared in common to said second disc-shaped panel 14. As well, the second disc-shaped panel 14 includes the mentioned cylindrical nucleus 46, which is provided with a hollow inner part that is outer fitted over a final end of the cavity 25, forming altogether the mentioned double reel.

As it can be seen better in fig 3, between the mentioned double cylindrical wall 15, 49, as a nucleus of the reel, and the cavity 25 is defined an inner annular space 52 where they are located the mentioned point of fixation 45 of the inner ends of the electrical cable 11 integrated in the extendable tube 10 and the hidden electrical cable 12. Said point of fixation is advantageously constituted by a joint strip 45, fixed to a place next to the spin axis of the reel, that makes the electrical connections as much as the mechanical. In mentioned inner annular space 52 also the fluid communication between the inner end of the tube 24 integrated in the extendable tube 10 and the annular camera 29 through said connection sleeve 38 sets. Through the double cylindrical wall 15,49 it is formed an opening 39 to allow the passage of extendable tube 10 between said inner annular space 52 and an external annular space 53 of winding of said tube 10.

A second disc-shaped panel 14 and the fixed panel 17 include peripheral cylindrical walls 54, with faced and slightly separated rims, with the purpose of defining an annular space 55 between said disc-shaped 14 and fixed panels 17, said peripheral cylindrical walls 54 and cylindrical nucleus 46, where hidden cable 12 evolves. In the second disc-shaped panel 14 there is an opening 56 for the pass of the inner end of the hidden cable from said annular space 55 to the mentioned inner annular space 52.

The assembly of spiral spring 50, in charge of the mentioned elastic load for the automatic coiled of tube 10 in the double reel, is described as follows in reference to the Figs. 1 and 2. The mentioned spiral spring 50 is housed within a box 60 provided with a cover 61 and a revolving nucleus 62 in respect to the box set and cover set 60, 61. One end of spiral spring 50 is fixed to the box set and cover set 60, 61 and the other end of the spring is fixed to said nucleus 62, which has a central through hole 63, of polygonal cross-sectional section. The nucleus 62 is mounted in a revolving way between the box 60 and the cover 61 and its central hole 63 is accessible through both faces of the box set and the cover set 60, 61. The box set and cover set 60,61, nucleus 62 and spiral spring 50 are in a coaxial space to the spin axis of the reel and defined by a cylindrical wall 66, shared in common of the first disc-shaped panel 13, and by a circular projection 69 of the fixed panel 19. Protuberance 22 is shared in common of the central part of the fixed panel 19 crosses the nucleus 62 through its hole 63, being the mentioned zone of coupling 30 of the protuberance 22, which has for such purpose a corresponding polygonal cross-sectional section, fitted in said hole 63. In a cylindrical outer wall of the box set and cover set 60,61 is arranged at least a projection 64 capable of fitting in a notch 65 foreseen for such purpose in the in the mentioned cylindrical wall 66 shared in common of the first disc-shaped panel 13. With it, the box set and cover set 60, 61 is connected with the revolving reel while nucleus 63 is connected to the fixed panel 13.

The device comprises an arrangement of pawl brake to prevent that, when any portion of extendable tube has extended, the reel turns in opposite direction by effect of the elastic force of spiral spring 50. Said disposition of pawl brake includes a trigger 51 arranged in a sliding way in the fixed panel 19 and stressed by a spring 58 towards a position of coupling with a regular circumferential teeth succession 57 (fig 2) formed in a side of first disc-shaped panel 13 faced to the fixed panel 19, whose trigger 51 is connected to a pushbutton 59 capable of being activated to move the trigger 51 against the action of the spring 58 and to decouple with this action said pawl brake.

Following now to the fig 5, in it there is an example of embodiment similar to the one described in relation to the Figs. 1 to 3, but adapted for a tube 10 that it includes, in addition to the first flexible fluid pipe 24, a second flexible fluid pipe 124. Here, in the central zone of the double reel, and coaxially to the spin axis of the same one, there are defined a first and a second annular chambers 29,129 defined between said fixed part, shared in common of the same fixed panel 17, 19, said movable part, shared in common of the double reel, and first, second and third means for watertightness 28,128,228 arranged between said fixed and movable parts. The mentioned third means of watertightness 228 separate the first annular chamber 29 of the said second annular chamber 129. In this case, and as the previous example, the fixed part that defines the first and the second annular chambers 29,129 comprises a protuberance 22, shared in common of the mentioned second fixed panel 19, that extends towards the inner part of the device, coaxially to the spin axis of the double reel. Nevertheless, here, said protuberance 22 has first and second inner hollows 47,147, independents, that is to say, that they are not communicated between them. The mentioned first inner hollow 47 comprises an axial opening in its joint end to the second fixed panel 19, where it is connected with the mentioned first fixed connection sleeve 34, and first radial orifices 20, opened in a sidewall of the protuberance 22, that communicate with the first annular chamber 29, whereas said second inner hollow 147 comprises an axial opening in an opposed end of the protuberance 22, which crosses the first fixed panel 17, where it is connected with the mentioned second fixed connection sleeve 134, and second orifices 120, radial, opened in a sidewall of the protuberance 22 and that communicate the mentioned second inner hollow 147 with the second annular chamber 129. First and second annular chambers 29,129 are respectively communicated, through first and second connection sleeves 38,138, shared in common of the movable part, with respective inner ends of said first and second fluid pipes 24,124 integrated in the tube 10, and through first and second connection sleeves 34,134, shared in common of the fixed part, with corresponding first and second external fluid pipes 23,123, taking place the exit of said second connection sleeve 134 by the end of the protuberance 22 axially opposed (the end) to the first connection sleeve 34. On the other hand, the movable part that defines the first and the second annular chambers 29,129 comprises a cavity 25 shared in common to one of said first or second disc-shaped panels 14 (specifically panel 13) and coaxial to the spin axis of the double reel. This cavity 25 is provided with radial orifices 26,126, opened in a same sidewall of the same one, and respectively connected to said first and second movable connection sleeves 38,138 in order to communicate them respectively with the first and second annular chambers 29,129. Cavity 25 is fitted and turns over the protuberance 22 with the position of the first, second and third means of watertightness 28,128, 228.

In this example of embodiment for two fluid pipes 24,124, the mentioned protuberance 22 comprises externally, throughout its length and from the fixed panel 19, an initial zone of coupling 30 for spiral spring 50. Next are three zones of watertightness, whose diameters are fitted to the diameters of corresponding zones of the cavity 25 for a suitable disposition between the same ones of the mentioned means of watertightness 28, 128, 228. With it they are formed, inserted between said three zones of watertightness two camera zones, of diameters substantially smaller than the diameters of corresponding faced zones of the cavity 25 and between which the annular chambers 29,129 is formed. In said chamber zones are there are the mentioned orifices 20,120. Protuberance 22 finishes in a final zone 133 of diameter fitted to the corresponding through orifice of the first fixed panel 17.

Referring now to fig 4., the device of the present invention is foreseen to be included, for example, in a service housing 67, which houses a fluid connection for said fluid pipe 23 (or for both fluid pipes 23,123, in the case of the example of embodiment of fig 5) and one electrical connection for an outer end of said hidden cable 12. The mentioned housing 67 has an input/output opening 68 of the tube 10. The mentioned releasing pushbutton 59 of the mentioned pawl brake is directly accessible through said service housing 67 or it is foreseen means in order that the pushbutton 59 can be activated by a user through said housing 67. With it, a user can extend the tube 10 applying a tractive force over a part of the same outside of the housing 67, with which the tube 10 is uncoiled from the corresponding reel, making it to turn it and loading the spiral spring 50. Later, the user can coil the tube 10 activating the pushbutton 59 in order to uncouple said pawl brake and to allow that spiral spring 50 makes the reel to rotate in opposite sense, producing the winding of tube 10.

This type of housings are useful, for example, for a steam iron (not shown). For it, the outer end of the hidden cable 12 will be connected electrically to a electrical energy supply source, and outer fluid pipe 23 will be connected to a source of supply of water/steam (in fact, a small steam generator from water can be including or in the housing or in the iron). On the other hand, the outer end of extendable tube 10 will be connected to the iron, with electrical cable 11 connected to the electrical system of the iron and the fluid pipe 24 connected to the device of the same one where water/steam is needed.

The device of the present invention is applicable to many other devices and using different fluids from the water, such as an electropneumatic tool or an dentistry device comprising a mechanical actuator and a blower/suctioner. On the other hand, the flow, as much of electricity as of fluid, can settle in anyone of two-way traffic.

The examples mentioned here are not limitative of the present invention, for that reason it will be able to have different applications and/or adaptations, all of them within the scope of the following claims.

## Claims

1. Automatic winding device with an extendable tube, which tube (10) includes a flexible electrical cable (11), being the device of the type that comprises a double revolving reel, loaded elastically, with a first compartment (53) for said extendable tube (10) defined by a cylindrical wall (15) as a nucleus and faced faces of first and second disc-shaped panels (13, 14) parallel to each other, and a second compartment (55) for a hidden electrical cable (12), also flexible, defined by a cylindrical nucleus (46), coaxial to the cylindrical wall (15), an opposed face of one of the mentioned first or second disc-shaped panels (14) and a first fixed panel (17) which is shared in common by its ends with a second fixed panel (19) that closes the set by the opposite side, being electrically connected the inner ends of the cable (11) of the tube (10) and the hidden cable (12) to each other and mechanically fixed to a point of fixation (45) next to the spin axis of said double reel and being an outer end of said hidden cable (12) mechanically fixed to a peripheral point (44) of said first fixed panel (17), which allows the manual extension of said tube (10) and its later automatic coiled by turn of the mentioned double reel while it is produced a compression and expansion of the hidden cable (12) within the second compartment of said reel and while keeps the mentioned electrical connection between both cables (11,12), said tube (10) includes in addition at least a flexible fluid pipe (24);
**characterized in that**:
a) in a central zone of the mentioned double reel, and coaxially to the spin axis of the same one, is defined at least one annular chamber (29) arranged between a fixed part, shared in common of one of said fixed panels (17,19), a movable part, shared in common part of the double reel, and means of watertightness (28) arranged between said parts fixed and movable, being said annular chamber (29), that it is at least one, communicated through a connection sleeve (38) shared in common of the movable part with an inner end of said flexible fluid pipe (24), that it is at least one, integrated in the tube (10) and through a connection sleeve (34) shared in common of the fixed part with an outer fluid pipe (23),
b) said fixed part that defines the annular chamber (29), that is at least one, comprises a protuberance (22), shared in common of the mentioned second fixed panel (19) and which it extends towards the inner part of the device coaxially to the spin axis of the double reel, whose protuberance (22) has a hollow inner part (47) with an axial opening in its end of union to the second fixed panel (19) where is connected with the mentioned fixed connection sleeve (34), and orifices (20) radially in a sidewall of the protuberance (22) that communicate the mentioned hollow inner part (47) with the annular chamber (29), whereas said movable part that defines the annular chamber (29) comprises a cavity (25) shared in common to one of said first or second disc-shaped panels (13) and coaxial to the spin axis of the double reel, being said cavity (25) provided with an orifice (26) in a sidewall of the same one connected the mentioned connection sleeve (38) movable in order to communicate the same one with the annular chamber (29), whose cavity (25) is coupled and turns on said protuberance (22).

2. Device, according to claim 1, **characterized in that** said tube (10) includes in addition:
- a second flexible fluid pipe (124); and because in said central zone of the double reel, and coaxially to the spin axis of same one, it is defined in addition a second annular chamber (129) defined between said fixed part, shared in common of the same fixed panel (17,19), said movable part, shared in common of the double reel, and second and third means of watertightness (128,228) arranged between said fixed and movable parts, separating said third means of watertightness (228) the first annular chamber (29) of said second annular chamber (129), and being the second annular chamber (129) communicated, through a second connection sleeve (138) shared in common of the movable part, with an inner end of said second flexible fluid pipe (124) integrated in the tube (10) and, through a second connection sleeve (134) shared in common of the fixed part, with a second external fluid pipe (123), taking place the exit of said second connection sleeve (134) by the side axially opposed to the first connection sleeve (34),
- said fixed part that it defines the first and the second annular chambers (29, 129) comprises a protuberance (22), shared in common of the mentioned second fixed panel (19) and that extends towards the inner part of the device coaxially to the spin axis of the double reel, whose protuberance (22) has a first and a second inner hollows (47,147), comprising said first inner hollow (47) an axial opening in its end of union to the second fixed panel (19) where it is connected with the mentioned first sleeve of fixed connection (34), and first orifices (20), radial, in a sidewall of the protuberance (22) that communicate the mentioned the first inner hollow (47) with the first annular chamber (29), and comprising said second inner hollow (147) an axial opening in an end of the protuberance (22) that crosses the first fixed panel (17) where it is connected with the mentioned second fixed connection sleeve (134), and second orifices (120), radial, in a sidewall of the protuberance (22) that communicate the mentioned second inner hollow (147) with the second annular chamber (129), whereas said movable part that it defines the first and second annular chambers (29,129) comprises a cavity (25) shared in common cavity to one of said first or second disc-shaped panels (14) and coaxial to the spin axis of the double reel, being said cavity (25) provided with orifices (26, 126), radial, in a sidewall of the same one respectively connected to said first and second connection sleeves (38), movables, to communicate the same one respectively with the first and second annular chambers (29), whose cavity (25) is fitted and turns on said protuberance (22).

3. Device, according to claim 1, **characterized in that** the mentioned protuberance (22) comprises throughout its length, and from the fixed panel (19), an initial coupling zone (30) for a spiral spring (50) in charge of the mentioned elastic load for the automatic coiled, next, a zone of watertightness (31) of diameter fit to a corresponding zone (36) of the cavity (25) and between them there are the mentioned means of watertightness (28), follows a chamber zone (32) of diameter substantially smaller than the one of a zone (36) corresponding of the cavity (25) and between them the annular chamber forms (29), being in said chamber zone (32) the mentioned orifices (20), and a final support zone (33) of a diameter fitted to the one of a final zone (37) corresponding of the cavity (25).

4. Device, according to claim 3, **characterized in that** said final support zone (33) of the protuberance (22) includes a configuration in hemispheric cap-shape (35) that adapts and supports in a blind bottom of the mentioned final zone of the cavity (25) in whose outer part there is a pivot (41) coaxial with the spin axis of the reel, whose pivot (41) houses in a corresponding hole (48) of the mentioned fixed panel (17) acting as the guide of the turn of the reel.

5. Device, according to claim 4, **characterized in that** the mentioned cavity (25) is shared in common with the first disc-shaped panel (13), which includes cylindrical wall (49) that fits inner in the mentioned cylindrical wall (15) as a nucleus, which is shared in common of said second disc-shaped panel (14), moreover incorporating the second disc-shaped panel (14) the mentioned cylindrical nucleus (46) which it is provided with a hollow inner part that is fitted externally on a final end of the cavity (25), forming altogether the mentioned double reel.

6. Device, according to claim 5, **characterized in that** between the mentioned double cylindrical wall (15,49) and the cavity (25) it is defined an inner annular space (52) where is located the mentioned point of fixation (45) close to the spin axis of the reel and said connection sleeve (38), in whose inner annular space (52) are the mentioned electrical connections between the inner ends of the cable (11) of the tube (10) and of the hidden cable (12) and the fluid connection between mentioned the end inner part of the flexible fluid pipe (24) of the tube (10) and the mentioned connection sleeve (38), being formed an opening (39) through said double cylindrical wall (15,49) to allow the passage of the tube (10) between said inner annular space (52) and an external annular space (53) of winding of said tube (10).

7. Device, according to the claim 6, **characterized in that** at least one of said second disc-shaped panel (14) and fixed panel (17), or both, includes peripheral cylindrical walls (54), being defined between said peripheral cylindrical walls (54) and the cylindrical nucleus (46) an annular space (55) where the hidden cable evolves (12), existing in the second disc-shaped panel (14) an opening (56) to pass the outer inner part of hidden cable from said annular space (55) to the mentioned inner annular space (52).

8. Device, according to claim 6, **characterized in that** it comprises an arrangement of pawl brake that includes a trigger (51) arranged in a sliding way in the fixed panel (19) and stressed by a spring (58) towards a position of coupling with a regular circumferential succession of teeth (57) formed in a side of the first disc-shaped panel (13) faced to the fixed panel (19), whose trigger (51) is connected to a pushbutton (59) capable of being activated to move the trigger (51) against the action of the spring (58) to uncouple said pawl brake.

9. Device, according to claim 2, **characterized in that** the mentioned protuberance (22) comprises throughout its length, and from the fixed panel (19), an initial zone of coupling (30) for spiral spring (50) in charge of the mentioned elastic load for the automatic colled, later, three zones of watertightness of diameters fitted to those diameters of corresponding zones of the cavity (25) and between them there are the mentioned means of watertightness (28, 128, 228), being put in between said three zones of watertightness two chamber zones of diameters substantially smaller that the diameters of corresponding zones of the cavity (25) and between which form the annular chambers (29,129), being in said chamber zones the mentioned orifices (20,120), finishing the protuberance (22) in a final zone (133) of diameter fitted to the one of a corresponding through orifice of the first fixed panel (17).

10. Device, according to claim 9, **characterized in that** the mentioned cavity (25) is shared in common of the first disc-shaped panel (13), which includes a cylindrical wall (49) that fits innerly in the mentioned cylindrical wall (15) as a nucleus, which is shared in common of said second disc-shaped panel (14), including the second disc-shaped panel (14) as well the mentioned cylindrical nucleus (46) which is provided with a hollow inner part that is fitted externally on a final end of the cavity (25), forming altogether the mentioned double reel.

11. Device, according to claim 10, **characterized in that** between the mentioned double cylindrical wall (15,49) and the cavity (25) it is defined an inner annular space (52) where is located the mentioned point of fixation (45) next to the spin axis of the reel and said first and second connection sleeves (38,138), in whose inner annular space (52) the mentioned electrical connections are produced between the inner ends of the cable (11) of the tube (10) and the hidden cable (12) and the fluid connections between the mentioned outer inner parts of the first and the second flexible fluid pipes (24,124) of the tube (10) and the mentioned first and second connection sleeves (38, 138), respectively, being formed an opening (39) through said double cylindrical wall (15,49) to allow to the pass of the tube (10) between said inner annular space (52) and an outer annular space (53) of winding of said tube (10).

12. Device, according to the claim 11, **characterized in that** at least one of said second disc-shaped panel (14) and fixed panel (17), or both, includes peripheral cylindrical walls (54), being defined between said peripheral cylindrical walls (54) and the cylindrical nucleus (46) an annular space (55) where the hidden cable evolves (12), existing in the second disc-shaped panel (14) a opening (56) for the pass of the outer inner part of the hidden cable from said annular space (55) to the mentioned inner annular space (52).

13. Device, according to claim 11, **characterized in that** it comprises an arrangement of pawl brake that includes a trigger (51) arranged in a sliding way in the fixed panel (19) and stressed by a spring (58) towards a position of connection with a regular circumferential succession of teeth (57) formed in a side of the first disc-shaped panel (13) faced to the fixed panel (19), whose trigger (51) is connected to a pushbutton (59) capable of being activated to move the trigger (51) against the action of the spring (58) to uncouple said pawl brake.

14. Device, according to claim 3 or 9, **characterized in that** said spiral spring (50), which is in charge of the mentioned elastic load for the automatic coiled of the tube (10) in the double reel, it is housed within a box (60) with a cover (61) and a revolving nucleus (62) with respect to the box set and cover set (60,61), being an end of the spiral spring (50) fixed to the box set and cover set (60,61) and another end fixed to said nucleus (62), which has a central hole (63) of polygonal cross-sectional section, accessible through both faces of the box set and cover set (60,61), in whose hole it fits the mentioned zone of coupling (30) of the protuberance (22), which is provided with a corresponding polygonal cross-sectional section, being arranged at least a projection (64) in a cylindrical outer wall of the box set and cover set (60,61) capable of fitting said end in a notch (65) foreseen for such purpose in a cylindrical wall (66) shared in common of the first disc-shaped panel (13) and that surrounds the box set and cover set (60, 61) of the spiral spring (50).

15. Device, according to claim 3 or 9, **characterized in that** the mentioned means of watertightness comprise respective annular joint members (28, 128, 228) housed in annular grooves (40) formed in said zones of watertightness of the protuberance (22) or in the mentioned zone corresponding to the cavity (25), whose annular joint members (28, 128, 228) project of said annular grooves (40) to altogether make contact in the wall of the opposite zone determining a watertight closing of the annular camera (29).

16. Device, according to claim 13, **characterized in that** it is adapted to be including in a service housing (67) that houses a fluid connection for said flexible fluid pipe (23) and an electrical connection for an outer end of said hidden cable (12) and an input/output opening (68) of the tube (10), being foreseen means so that said pushbutton (59) can be activated by a user through said service housing (67) with the purpose of uncouple said pawl brake of winding of the tube (10).

## Patentansprüche

1. Automatische Wickelvorrichtung mit ausfahrbarem Rohr (10), wobei das Rohr (10) ein biegsames Elektrokabel (11) enthält und die Vorrichtung eine Doppeldrehrolle umfasst, die elastisch gespannt wird, mit einer ersten Kammer (53) für das ausfahrbare Rohr (10), die durch eine Zylinderwand (15) als Kern und gegenüberliegende Flächen einer ersten und zweiten scheibenförmigen Platte (13, 14), die zueinander parallel angeordnet sind, definiert ist, und einer zweiten Kammer (55) für ein ebenfalls biegsames, verstecktes Elektrokabel (12), die durch einen zylindrischen Kern (46), der koaxial zur Zylinderwand (15) verläuft, und eine gegenüberliegende Fläche einer der genannten ersten oder zweiten scheibenförmigen Platte (14) und einer ersten feststehenden Platte (17) definiert ist, die an den Enden mit einer zweiten feststehenden Platte (19) verbunden ist, durch die der Aufbau auf der gegenüberliegenden Seite abgeschlossen wird, wobei die Innenendflächen des Kabels (11) des Rohrs (10) und des versteckten Kabels (12) elektrisch miteinander verbunden und an einem Befestigungspunkt (45) neben der Drehachse der Doppelrolle mechanisch befestigt sind, wobei ein äußeres Ende des versteckten Kabels (12) an einem äußeren Punkt (44) der ersten feststehenden Platte (17) befestigt ist, wodurch das Rohr (10) manuell ausgefahren und anschließend beim Drehen der genannten Doppelrolle automatisch aufgewickelt wird, wodurch in dem versteckten Kabel (12) innerhalb der zweiten Kammer der Rolle unter Aufrechterhaltung der genannten elektrischen Verbindung zwischen beiden Kabeln (11, 12) ein Stauchen und Ausdehnen erfolgt, wobei in dem Rohr (10) zusätzlich mindestens ein biegsamer Flüssigkeitsschlauch (24) eingebaut ist,
**dadurch gekennzeichnet, dass**:
a) in einem mittleren Bereich der Doppelrolle und koaxial zur Drehachse derselben zumindest eine Ringkammer (29) definiert ist, die zwischen einem feststehenden Teil, das auch Bestandteil einer der feststehenden Platten (17, 19) ist, einem beweglichen Teil, der auch Bestandteil der Doppelrolle ist, und zwischen dem beweglichen und feststehenden Teil angeordneten Wasserdichtigkeitsmitteln (28) angeordnet ist, wobei die zumindest eine Ringkammer (29) über einen Verbindungsstutzen (38), der auch Bestandteil des beweglichen Teils ist, mit einer Innenendfläche des zumindest einen in das Rohr (10) eingebauten biegsamen Flüssigkeitsschlauchs (24), und über einen Verbindungsstutzen (34), der auch Bestandteil des feststehenden Teils ist, mit einem äußeren Flüssigkeitsschlauch (23) kommuniziert,
b) das feststehende Teil, durch das die zumindest eine Ringkammer (29) definiert ist, eine Ausstülpung (22) aufweist, die auch Bestandteil der genannten zweiten feststehenden Platte (19) ist und sich koaxial zur Drehachse der Doppelrolle in Richtung des Innenteils der Vorrichtung erstreckt, wobei dessen Ausstülpung (22) am Ende der Verbindung mit der zweiten feststehenden Platte (19), wo es mit dem genannten feststehenden Verbindungsstutzen (34) verbunden ist, ein hohles Innenteil (47) mit einer axialen Öffnung und radial in einer Seitenwand der Ausstülpung (22) Öffnungen (20) aufweist, über die das genannte hohle Innenteil (47) mit der Ringkammer (29) kommuniziert, während das bewegliche Teil, durch das die Ringkammer (29) definiert ist, einen Hohlraum (25) umfasst, der auch Bestandteil einer der ersten oder zweiten scheibenförmigen Platte (13) ist und koaxial zur Drehachse der Doppelrolle verläuft, wobei der Hohlraum (25) mit einer Öffnung (26) in einer Seitenwand desselben versehen ist, durch der genannte Verbindungsstutzen (38) beweglich verbunden ist, damit dieser mit der Ringkammer (29) kommuniziert, deren Hohlraum (25) gekoppelt ist und sich um die Ausstülpung (22) dreht.

2. Vorrichtung nach Anspruch 1, **dadurch gekennzeichnet, dass** im Rohr (10) zusätzlich folgendes eingebaut ist:
- ein zweiter biegsamer Flüssigkeitsschlauch (124), wobei im mittleren Bereich der Doppelrolle koaxial zur Drehachse desselben zwischen dem feststehenden Teil, das auch Bestandteil der zweiten feststehenden Platte (17, 19) ist, dem beweglichen Teil, das auch Bestandteil der Doppelrolle ist, und dem zwischen dem feststehenden und beweglichen Teil angeordneten zweiten und dritten Wasserdichtigkeitsmittel (128, 228) zusätzlich eine zweite Ringkammer (129) definiert ist, wodurch das dritte Wasserdichtigkeitsmittel (228) die erste Ringkammer (29) von der zweiten Ringkammer (129) trennt und die zweite Ringkammer (129) über einen zweiten Verbindungsstutzen (138), der auch Bestandteil des beweglichen Teils ist, mit einer Innenendfläche des im Rohr (10) integrierten zweiten biegsamen Flüssigkeitsschlauchs (124) und über einen zweiten Verbindungsstutzen (134), der auch Bestandteil des feststehenden Teil ist, mit einem zweiten äußeren Flüssigkeitsschlauch (123) kommuniziert, wobei der Ausgang des zweiten Verbindungsstutzens (134) an der dem ersten Verbindungsstutzen (34) axial gegenüberliegenden Seite erfolgt,
- wobei das feststehende Teil, durch das die erste und zweite Ringkammer (29, 129) definiert ist, eine Ausstülpung (22) umfasst, die auch Bestandteil der genannten zweiten feststehenden Platte (19) ist und sich koaxial zur Drehachse der Doppelrolle in Richtung des Innenteils der Vorrichtung erstreckt, wobei die Ausstülpung (22) einen ersten und zweiten Innenhohlraum (47, 147) aufweist, wobei der erste Innenhohlraum (47) am Ende der Verbindung mit der zweiten feststehenden Platte (19), wo er mit dem genannten ersten Stutzen der feststehenden Verbindung (34) verbunden ist, eine axiale Öffnung sowie in einer Seitenwand der Ausstülpung (22) erste radiale Öffnungen (20) aufweist, über die der genannte erste Innenhohlraum (47) mit der ersten Ringkammer (29) kommuniziert, und der zweite Innenhohlraum (147) an einem Ende der Ausstülpung (22) eine axiale Öffnung, die die erste feststehende Platte (17) kreuzt, wo er mit dem genannten zweiten feststehenden Verbindungsstutzen (134) verbunden ist, sowie in einer Seitenwand der Ausstülpung (22) zweite radiale Öffnungen (120) aufweist, über die der genannte zweite Innenhohlraum (147) mit der zweiten Ringkammer (129) kommuniziert, während das bewegliche Teil, durch das die erste und zweite Ringkammer (29, 129) definiert ist, einen Hohlraum (25) umfasst, der auch Bestandteil der ersten und zweiten scheibenförmigen Platte (14) ist und koaxial zur Drehachse der Doppelrolle verläuft, wobei der Hohlraum (25) in einer Seitenwand desselben mit radialen Öffnungen (26, 126) versehen ist, die mit dem ersten bzw. zweiten beweglichen Verbindungsstutzen (38) verbunden sind, wodurch diese mit der ersten bzw. zweiten Ringkammer (29) kommunizieren, deren Hohlraum (25) gekoppelt ist und sich um die Ausstülpung (22) dreht.

3. Vorrichtung nach Anspruch 1, **dadurch gekennzeichnet, dass** die genannte Ausstülpung (22) über ihre gesamte Länge und ab der feststehenden Platte (19) einen Anfangskopplungsbereich (30) für eine Spiralfeder (50) zur Aufnahme der genannten Federbelastung für das automatische Aufwickeln, anschließend einen Wasserdichtigkeitsbereich (31) mit einem zu einem entsprechenden Bereich (36) des Hohlraums (25) passenden Durchmesser umfasst, wobei dazwischen die genannten Wasserdichtigkeitsmittel (28) angeordnet sind, an die sich ein Kammerbereich (32) mit einem im wesentlichen kleineren Durchmesser als dem des dem Hohlraum (25) entsprechenden Bereichs (36) anschließt und dazwischen die Ringkammer (29) ausgebildet ist, wobei sich im Kammerbereich (32) die genannten Öffnungen (20) sowie ein Endstützbereich (33) mit einem zu dem Durchmesser eines dem Hohlraum (25) entsprechenden Endbereichs (37) passenden Durchmesser befinden.

4. Vorrichtung nach Anspruch 3, **dadurch gekennzeichnet, dass** der Endstützbereich (33) der Ausstülpung (22) in Halbkreis-Kappenform (35) ausgeführt ist, durch die ein Blindboden des genannten Endbereichs des Hohlraums (25) angepasst und gestützt wird, in dessen Außenteil axial zur Drehachse der Doppelrolle ein Drehpunkt (41) vorhanden ist, der in einer entsprechenden Bohrung (48) der genannten feststehenden Platte (17) untergebracht ist, die als Führung für die Drehung der Rolle dient.

5. Vorrichtung nach Anspruch 4, **dadurch gekennzeichnet, dass** der genannte Hohlraum (25) auch Bestandteil der ersten scheibenförmigen Platte (13) ist, die eine Zylinderwand (49) aufweist, die als Kern in das Innere der genannten Zylinderwand (15) passt, die auch Bestandteil der zweiten scheibenförmigen Platte (14) ist, in der außerdem der genannte zylindrische Kern (46) angeordnet ist, der mit einem Innenhohlteil versehen ist, das von außen auf den Endabschnitt des Hohlraums (25) aufgesetzt ist, wodurch insgesamt die genannte Doppelrolle entsteht.

6. Vorrichtung nach Anspruch 5, **dadurch gekennzeichnet, dass** zwischen der genannten zylindrischen Doppelwand (15, 49) und dem Hohlraum (25) ein Innenringraum (52) definiert ist, wo sich der genannte Befestigungspunkt (45) nahe der Drehachse der Rolle und des Verbindungsstutzens (38) befinden, in dessen Innenringraum (52) die genannten elektrischen Verbindungen zwischen den Innenendflächen des Kabels (11) des Rohrs (10) und des versteckten Kabels (12) sowie die Flüssigkeitsverbindung zwischen dem genannten Endinnenteil des biegsamen Flüssigkeitsschlauchs (24) des Rohrs (10) und dem genannten Verbindungsstutzen (38) befinden, wobei durch die zylindrische Doppelwand (15, 49) eine Öffnung (39) hergestellt wurde, damit das Rohr (10) zwischen dem Innenringraum (52) und dem äußeren Ringraum (53) der Wicklung des Rohrs (10) hindurchgeführt werden kann.

7. Vorrichtung nach Anspruch 6, **dadurch gekennzeichnet, dass** mindestens eine der zweiten scheibenförmigen Platte (14) und der feststehenden Platte (17) oder beide äußere Zylinderwände (54) aufweist, wobei zwischen den äußeren Zylinderwänden (54) und dem zylindrischen Kern (46) ein Ringraum (55) definiert ist, wo das versteckte Kabel (12) herauskommt, wobei in der zweiten scheibenförmigen Platte (14) eine Öffnung (56) vorhanden ist, durch die das äußere Innenteil des versteckten Kabels von dem Ringraum (55) in den genannten Innenringraum (52) geführt werden kann.

8. Vorrichtung nach Anspruch 6, **dadurch gekennzeichnet, dass** sie eine Anordnung einer Klinkenbremse umfasst, in der ein Auslöser (51) eingebaut ist, der gleitend in der feststehenden Platte (19) angeordnet und durch eine Feder (58) in Richtung einer Kopplungsposition mit regelmäßiger Folge von Zähnen (57) entlang des Umfangs gespannt ist, die an einer Seite der ersten scheibenförmigen Platte (13) ausgebildet sind und der feststehenden Platte (19) gegenüberliegen, dessen Auslöser (51) mit einem Drucktaster (59) verbunden ist, der zur Verschiebung des Auslösers (51) gegen die Wirkung der Feder (58) zwecks Entkopplung der Klinkenbremse betätigt werden kann.

9. Vorrichtung nach Anspruch 2, **dadurch gekennzeichnet, dass** die genannte Ausstülpung (22) über ihre gesamte Länge und ab der feststehenden Platte (19) einen Anfangskopplungsbereich (30) für eine Spiralfeder (50) zur Aufnahme der genannten Federbelastung für das automatische Aufwickeln, anschließend drei Wasserdichtigkeitsbereiche mit zu entsprechenden Bereichen des Hohlraums (25) passenden Durchmessern umfasst, wobei dazwischen die genannten Wasserdichtigkeitsmittel (28, 128, 228) angeordnet sind und zwischen den drei Wasserdichtigkeitsbereichen zwei Kammerbereiche mit im wesentlichen kleineren Durchmessern als die Durchmesser der dem Hohlraum (25) entsprechenden Bereiche angeordnet sind und dazwischen die Ringkammern (29, 129) ausgebildet sind, wobei sich in den Kammerbereichen die genannten Öffnungen (20, 120) befinden, wobei die Ausstülpung (22) in einem Endbereich (133) mit einem Durchmesser endet, der an den einer entsprechenden Durchgangsöffnung der ersten feststehenden Platte (17) angepasst ist.

10. Vorrichtung nach Anspruch 9, **dadurch gekennzeichnet, dass** der genannte Hohlraum (25) auch Bestandteil der ersten scheibenförmigen Platte (13) ist, in der eine Zylinderwand (49) vorhanden ist, die innen in die genannte Zylinderwand (15) als Kern passt und auch Bestandteil der zweiten scheibenförmigen Platte (14) ist, einschließlich der zweiten scheibenförmigen Platte (14) sowie des genannten zylindrischen Kerns (46), der mit einem Innenhohlteil versehen ist, das von außen auf den Endabschnitt des Hohlraums (25) aufgesetzt ist, wodurch insgesamt die Doppelrolle entsteht.

11. Vorrichtung nach Anspruch 10, **dadurch gekennzeichnet, dass** zwischen der genannten zylindrischen Doppelwand (15, 49) und dem Hohlraum (25) ein Innenringraum (52) definiert ist, wo sich der genannte Befestigungspunkt (45) neben der Drehachse der Rolle und dem ersten und zweiten Verbindungsstutzen (38, 138) befindet, in dessen Innenringraum (52) die genannten elektrischen Verbindungen zwischen den Innenendflächen des Kabels (11) des Rohrs (10) und des versteckten Kabels (12) sowie die Flüssigkeitsverbindungen zwischen dem genannten äußeren Innenteilen des ersten und zweiten biegsamen Flüssigkeitsschlauchs (24, 124) des Rohrs (10) und dem genannten ersten bzw. zweiten Verbindungsstutzen (38, 138) hergestellt werden, wobei durch die zylindrische Doppelwand (15, 49) hindurch eine Öffnung (39) ausgebildet ist, damit das Rohr (10) zwischen dem Innenringraum (52) und dem äußeren Ringraum (53) der Wicklung des Rohrs (10) hindurchgeführt werden kann.

12. Vorrichtung nach Anspruch 11, **dadurch gekennzeichnet, dass** mindestens eine der zweiten scheibenförmigen Platte (14) und der feststehenden Platte (17) oder beide äußere Zylinderwände (54) aufweist, wobei zwischen den äußeren Zylinderwänden (54) und dem zylindrischen Kern (46) ein Ringraum (55) definiert ist, wo das versteckte Kabel (12) herauskommt, wobei in der zweiten scheibenförmigen Platte (14) eine Öffnung (56) vorhanden ist, durch die das äußere Innenteil des versteckten Kabels von dem Ringraum (55) in den genannten Innenringraum (52) geführt werden kann.

13. Vorrichtung nach Anspruch 11, **dadurch gekennzeichnet, dass** sie eine Anordnung einer Klinkenbremse umfasst, in der ein Auslöser (51) eingebaut ist, der gleitend in der feststehenden Platte (19) angeordnet und durch eine Feder (58) in Richtung einer Kopplungsposition mit regelmäßiger Folge von Zähnen (57) entlang des Umfangs gespannt ist, die an einer Seite der ersten scheibenförmigen Platte (13) ausgebildet sind und der feststehenden Platte (19) gegenüberliegen, deren Auslöser (51) mit einem Drucktaster (59) verbunden ist, der zur Verschiebung des Auslösers (51) gegen die Wirkung der Feder (58) zwecks Entkopplung der Klinkenbremse betätigt werden kann.

14. Vorrichtung nach Anspruch 3 oder 9, **dadurch gekennzeichnet, dass** die Spiralfeder (50), die zur Aufnahme der genannten Federbelastung für das automatische Aufwickeln des Rohrs (10) in der Doppelrolle dient, in einem Kasten (60) mit Deckel (61) und Drehkern (62) bezüglich des Aufbaus aus Kasten und Deckel (60, 61) untergebracht ist, wobei ein Ende der Spiralfeder (50) am Aufbau aus Kasten und Deckel (60, 61) und das andere Ende am Kern (62) befestigt ist, der ein Mittenloch (63) mit einem Abschnitt mit Polygonquerschnitt aufweist, das über beide Flächen des Aufbaus aus Kasten und Deckel (60, 61) zugänglich ist, in deren Loch der genannte Kopplungsbereich (30) der Ausstülpung (22) passt, die mit einem entsprechenden Abschnitt mit Polygonquerschnitt versehen ist, wobei zumindest ein Vorsprung (64) in einer zylindrischen Außenwand des Aufbaus aus Kasten und Deckel (60, 61) angeordnet ist, über die das Ende in eine für diesen Zweck in einer Zylinderwand (66) vorgesehene Kerbe (65) passt, die auch Bestandteil der ersten scheibenförmigen Platte (13) ist und den Aufbau aus Kasten und Deckel (60, 61) der Spiralfeder (50) umgibt.

15. Vorrichtung nach Anspruch 3 oder 9, **dadurch gekennzeichnet, dass** die genannten Wasserdichtigkeitsmittel jeweils ringförmige Dichtungselemente (28, 128, 228) aufweisen, die in Ringnuten (40) lagern, die in den Wasserdichtigkeitsbereichen der Ausstülpung (22) oder in dem genannten, dem Hohlraum (25) entsprechenden Bereich ausgebildet sind, deren ringförmige Dichtungselemente (28, 128, 228) von den Ringnuten (40) hervorstehen, wodurch insgesamt in der Wand des gegenüberliegenden Bereichs ein Kontakt hergestellt wird, wodurch ein wasserdichtes Verschließen der Ringkammer (29) definiert ist.

16. Vorrichtung nach Anspruch 13, **dadurch gekennzeichnet, dass** in ihr ein Servicegehäuse (67) eingebaut werden kann, in dem eine Flüssigkeitsverbindung für den biegsamen Flüssigkeitsschlauch (23) und eine elektrische Verbindung für ein äußeres Ende des versteckten Kabels (12) sowie eine Eingangs-/Ausgangsöffnung (68) des Rohrs (10) untergebracht sind, wobei Mittel vorgesehen sind, mit denen ein Bediener den Drucktaster (59) durch das Servicegehäuse (67) hindurch betätigen kann, mit dem Ziel, die Klinkenbremse für das Aufwickeln des Rohrs (10) zu entkoppeln.

## Revendications

1. Dispositif d'enroulage automatique, muni d'un tube extensible, ce tube (10) incluant un câble électrique flexible (11), ce dispositif étant du type qui comporte une bobine double rotative, chargée élastiquement, avec un premier compartiment (53) pour le tube extensible (10), défini par une paroi cylindrique (15) en tant que noyau, les faces opposées d'un premier et second panneau en forme de disque (13, 14), étant parallèles l'une par rapport à l'autre, et un second compartiment (55) destiné à un câble électrique caché (12) également flexible, défini par un noyau cylindrique (46), coaxial par rapport à la paroi cylindrique (15), la face opposée de l'un des premiers et seconds panneaux en forme de disque (14) et un premier panneau fixe (17), partageant en commun par leurs extrémités un second panneau fixe (19), qui referme l'ensemble du côté opposé, les extrémités internes du câble (11), du tube (10) et du câble caché (12) étant électriquement connectées les unes aux autres et mécaniquement fixées à un point de fixation (45) près de l'axe de rotation de la bobine double et une extrémité externe du câble caché (12) étant mécaniquement fixée à un point de la périphérie (44) de ce premier panneau fixe (17), ce qui permet l'extension manuelle du tuyau (10), qui peut être ensuite enroulé automatiquement par la rotation de la bobine double, pendant que se produit la compression et l'expansion du câble caché (12) à l'intérieur du second compartiment de la bobine et que se maintient la connexion électrique entre les deux câbles (11,12), le tuyau (10) comprenant de plus au moins un conduit de fluide flexible (24),
**caractérisé par le fait que** :
a) dans une zone centrale de cette bobine double et de manière coaxiale par rapport à l'axe de rotation de celle-ci est définie au moins une chambre annulaire (29) disposée entre une partie fixe, partagée par la partie commune de l'un des panneaux fixes (17, 19), une partie mobile, partagée par la partie commune de la bobine double, ainsi que des éléments d'étanchéité (28) disposés entre ces parties fixe et mobile, cette chambre annulaire (29) - au moins une - communiquant à travers un manchon de connexion (38) partagé avec la partie commune mobile de l'extrémité intérieure du conduit de fluide (24) flexible - au moins un - intégré au tube (10) et, à travers un manchon de connexion (34) partagé avec la partie commune fixe du conduit de fluide externe (23).
b) la partie fixe qui définit la chambre annulaire (29) au moins au nombre d'une, comporte une protubérance (22), partagée en commun avec le second panneau fixe (19) qui s'étend de vers la partie interne du dispositif de manière coaxiale par rapport à l'axe de rotation de la bobine double, dont la protubérance (22) présente une parte intérieure creuse (47) avec une ouverture axiale à l'extrémité de son union avec le second panneau fixe (19), où elle est connectée au manchon de connexion fixe (34) et des orifices (20) situés radialement sur une paroi latérale de la protubérance (22) qui fait communiquer la partie intérieure creuse (47) avec la chambre annulaire (29), alors que la partie mobile qui définit la chambre annulaire (29) comporte une cavité (25) partagée avec un des premiers ou seconds panneaux en forme de disque (13) située de manière coaxiale par rapport à l'axe de rotation de la bobine double, cette cavité (25) étant munie d'un orifice (26) sur une paroi latérale de celui-ci connectée au manchon de connexion (38) mobile afin de faire communiquer celui-ci avec la chambre annulaire (29), dont la cavité (25) est accouplée et tourne sur cette protubérance (22).

2. Dispositif conformément à la revendication 1, **caractérisé par le fait que** le tuyau (10) comprend de plus :
- un deuxième conduit de fluide flexible (124) étant donné que dans la zone centrale du moulinet double et de manière coaxiale à l'axe de rotation de celle-ci, se trouve une seconde chambre annulaire (129) entre la partie fixe, partagée avec le même panneau fixe (17,19), la partie mobile partagée de la bobine double et des second et troisième élément d'étanchéité (128, 228) disposés entre les parties fixes et mobiles, ce troisième moyen d'étanchéité (228) séparant la première chambre annulaire (29) et la seconde chambre annulaire (129), la seconde chambre annulaire (129) communiquant à travers un second manchon de connexion (138) partagé avec la partie mobile, une des extrémités intérieures du second conduit flexible de fluide (124) étant intégrée dans le tube (10) et, à travers un second manchon de connexion (134) partagé avec la partie fixe, avec un second conduit externe de fluide (123), cette sortie du manchon de connexion (134) se trouvant du côté axialement opposé au premier manchon de connexion (34).
- la partie fixe qui définit les première et seconde chambres annulaires (29, 129) comporte une protubérance (22), partagée avec le second panneau fixe (19), qui s'étend vers la partie intérieure du dispositif de manière coaxiale par rapport à l'axe de rotation de la bobine double, dont la protubérance (22) présente une première et une seconde dépressions (47, 147), cette première dépression intérieure (47) comportant une ouverture axiale à l'extrémité de son union avec le second panneau fixe (19) où elle est connectée au premier manchon de connexion fixe (34) et aux premiers orifices (20) radiaux, dans une paroi latérale de la protubérance (22) qui fait communiquer la première dépression intérieure (47) avec la première chambre annulaire (29), la seconde dépression intérieure (147) comportant une ouverture axiale à une extrémité de la protubérance (22), qui traverse le premier panneau fixe (17) à l'endroit où il est connecté au second manchon de connexion fixe (134), et des seconds orifices (120) radiaux, dans une paroi latérale de la protubérance (22) qui fait communiquer la seconde dépression intérieure (147) avec la seconde chambre annulaire (129), alors que la partie mobile qui définit les première et seconde chambres annulaires (29, 129) comporte une cavité (25) partagée avec la cavité en commun de l'un des premiers ou seconds panneaux en forme de disque (14) de manière coaxiale par rapport à l'axe de rotation de la bobine double, la cavité (25) disposant des orifices (26, 126) radiaux dans la paroi latérale de celui-ci, respectivement connectés aux premier et second manchons de connexion (38) mobiles, afin de faire communiquer celui-ci respectivement avec les première et seconde chambres annulaires (29), dont la cavité (25) est montée et tourne sur la protubérance (22).

3. Dispositif conformément à la revendication 1, **caractérisé par le fait que** la protubérance (22) comporte sur toute sa longueur à partir du panneau fixe (19) une zone d'accouplement initiale (30) destinée à un ressort en spirale (50) prévu pour le chargement élastique d'un bobinage automatique, à côté d'une zone d'étanchéité (31) d'un diamètre prévu pour la zone correspondante (36) de la cavité (25) et qu'il existe entre eux les éléments d'étanchéité (28), suit une zone de la chambre (32) d'un diamètre substantiellement plus petit que celui de la zone (36) correspondante de la cavité (25) et entre eux les formes de la chambre annulaire (29), avec l'existence dans la zone de la chambre (32) des orifices (20) et d'une zone de soutien finale (33) d'un diamètre adapté à celui de la zone finale (37) correspondante de la cavité (25).

4. Dispositif conformément à la revendication 3 **caractérisé par le fait que** cette zone de soutien finale (33) de la protubérance (22) comporte une configuration en forme capuchon (35) qui s'adapte et est supportée dans le faux fond de la zone finale de la cavité (25), dans la partie externe de laquelle se trouve un pivot (41) coaxial par rapport à l'axe de rotation de la bobine, dont le pivot (41) s'encastre dans un orifice correspondant (48) du panneau fixe (17) servant de guide à la rotation de la bobine.

5. Dispositif conformément à la revendication 4, **caractérisé par le fait que** la cavité (25) est partagée en commun avec le premier panneau en forme de disque (13), qui comporte une paroi cylindrique (49) qui s'adapte à l'intérieur de la paroi cylindrique (15) en tant que noyau, partagé en commun avec le second panneau en forme de disque (14), et incorpore en plus du second panneau en forme de disque (14) le noyau cylindrique (46) qui est livré avec une partie intérieure creuse ajustée extérieurement sur une extrémité finale de la cavité (25), formant ainsi conjointement la bobine double.

6. Dispositif conformément à la revendication 5, **caractérisé par le fait qu'**entre la double paroi cylindrique (15, 49) et la cavité (25) se trouve un espace annulaire intérieur (52) où est logé le point de fixation (45) près de l'axe de rotation de la bobine et du manchon de connexion (38), où se trouvent dans l'espace annulaire intérieur (52) les connexions électriques entre les extrémités intérieures du câble (11) du tube (10) et du câble caché (12) et la connexion de fluide entre la partie extérieure de l'extrémité du conduit de fluide flexible (24) du tube (10) et du manchon de connexion (38), avec la formation d'une ouverture (39) à travers la double paroi cylindrique (15, 49) destiné à permettre le passage du tube (10) entre l'espace annulaire intérieur (52) et l'espace annulaire extérieur (53) pour l'enroulage de ce tube (10).

7. Dispositif conformément à la revendication 6, **caractérisé par le fait qu'**au moins un des seconds panneaux en forme de disque (14) et le panneau fixe (17) ou tous les deux comportent des parois cylindriques périphériques (54) avec la définition entre ces parois cylindriques périphériques (54) et le noyau cylindrique (46) d'un espace annulaire (55) où le câble caché (12) évolue, avec l'existence dans le second panneau en forme de disque (14) d'une ouverture (56) permettant de faire passer la partie intérieure extérieure du câble caché de cet espace annulaire (55) à l'espace annulaire intérieur (52).

8. Dispositif conformément à la revendication 6, **caractérisé par le fait qu'**il comporte un système de frein à cliquet qui comprend une détente (51) disposée de manière à glisser dans le panneau fixe (19) et tendue par un ressort (58) vers une position d'accouplement avec une succession de dents régulière circonférentielle (57) créée sur un côté du premier panneau en forme de disque (13) faisant face au panneau fixe (19), dont la détente (51) est connectée à un poussoir (59) capable d'être activé pour déplacer la détente (51) contre l'action du ressort (58) pour désaccoupler le frein à cliquet.

9. Dispositif conformément à la revendication 2, **caractérisé par le fait que** la protubérance (22) comporte sur toute sa longueur, depuis le panneau fixe (19), une zone initiale d'accouplement (30) destinée au ressort en spirale (50) prévue pour le chargement de l'enroulage automatique, puis trois zones d'étanchéité dont le diamètre correspond au diamètre des zones correspondantes de la cavité (25) et qu'entre celles-ci se trouvent les éléments d'étanchéité (28, 128, 228), avec l'insertion entre ces trois zones d'étanchéité de deux zones de chambres d'un diamètre substantiellement plus petit que le diamètre des zones correspondantes de la cavité (25) entre lesquelles se forment les chambres annulaires (29, 119), avec dans ces zones de chambre les orifices (20, 120), la protubérance (22) se terminant dans une zone finale (133) d'un diamètre adapté à celui d'un orifice correspondant du premier panneau fixe (17).

10. Dispositif, conformément à la revendication 9, **caractérisé par le fait que** la cavité (25) est partagée avec le premier panneau en forme de disque (13), qui comprend une paroi cylindrique (49) qui s'adapte à l'intérieur de la paroi cylindrique (15) en tant que noyau partagé avec ce second panneau en forme de disque (14), y compris le second panneau en forme de disque (14), ainsi que le noyau cylindrique (46), muni d'une partie intérieure creuse qui s'adapte extérieurement à l'extrémité finale de la cavité (25) et forme ainsi la bobine double.

11. Dispositif, conformément à la revendication 10, **caractérisé par le fait qu'**entre la double paroi cylindrique (15, 49) et la cavité (25) se trouve un espace annulaire intérieur (52) où est logé le point de fixation (45) près de l'axe de rotation de la bobine et des premier et second manchons de connexion (38,138), espace annulaire intérieur (52) où se produisent les connexions électriques entre les extrémités intérieures du câble (11) du tube (10) et le câble caché (12) et les connexions de fluide entre les parties extérieures intérieures des premier et second conduits de fluide flexibles (24, 124) du tube (10) et les premier et second manchons de connexion (38,138) respectivement, une ouverture (39) se formant à travers la double paroi cylindrique (15, 49) pour permettre le passage du tube (10) entre l'espace annulaire intérieur (52) et l'espace annulaire extérieur (53) d'enroulage du tube (10).

12. Dispositif, conformément à la revendication 11, **caractérisé par le fait qu'**au moins un de ce second panneau en forme de disque (14) et le panneau fixe (17), ou tous les deux, comprennent des parois cylindriques périphériques (54), avec entre ces parois cylindriques périphériques (54) et le noyau cylindrique (46) un espace annulaire (55) où le câble caché (12) évolue et dans le second panneau en forme de disque (14) une ouverture (56) destinée à permettre le passage de la partie extérieure intérieure du câble caché de cet espace annulaire (55) à l'espace annulaire intérieur (52).

13. Dispositif, conformément à la revendication 11, **caractérisé par le fait qu'**il comporte un système de frein à cliquet qui comprend une détente (51) prévue pour glisser dans le panneau fixe (19) et tendue par un ressort (58) vers une position de connexion avec une succession de dents circonférentielle régulière (57) créée sur un côté du premier panneau en forme de disque (13) opposé au panneau fixe (19), dont la détente (51) est connectée à un poussoir (59) capable d'être activé pour déplacer la détente (51) contre l'action du ressort (58) pour désaccoupler le frein à cliquet.

14. Dispositif, conformément aux revendications 3 ou 9, **caractérisé par le fait que** le ressort en spirale (50), destiné à la charge élastique de l'enroulage automatique du tube (10) dans la bobine double, est logé dans un boîtier (60) avec un couvercle (61) et un noyau giratoire (62) par rapport à l'ensemble du boîtier et de l'ensemble du couvercle (60, 61), une extrémité du ressort en spirale (50) étant fixée à l'ensemble du boîtier et à l'ensemble du couvercle (60,61) et l'autre extrémité fixée au noyau (62), qui présente un orifice central (63) à section polygonale transversale, accessible par les deux faces de l'ensemble du boîtier et de l'ensemble du couvercle (60,61) orifice où s'adapte la zone d'accouplement (30) de la protubérance (22), qui est munie d'une section polygonale transversale, une projection (64) au moins étant prévue dans une paroi extérieure cylindrique de l'ensemble du boîtier et de l'ensemble du couvercle (60, 61) capable de s'adapter à cette extrémité dans une encoche (65) prévue à cet effet dans le mur cylindrique (66) partagée avec le premier panneau en forme de disque (13) qui entoure l'ensemble du boîtier et l'ensemble du couvercle (60,61) du ressort en spirale (50).

15. Dispositif, conformément aux revendications 3 ou 9, **caractérisé par le fait que** les éléments d'étanchéité comportent des éléments de joints annulaires respectifs (28, 128, 228) logés dans les rainures annulaires (40) prévues dans les zones d'étanchéité de la protubérance (22) ou dans la zone correspondant à la cavité (25), éléments de joints annulaires (28, 128, 228) qui dépassent des rainures annulaires (40) pour faire contact sur la paroi de la zone opposée, ce qui permet d'obtenir la fermeture étanche de la chambre annulaire (29).

16. Dispositif, conformément à la revendication 13, **caractérisé par le fait qu'**il a été prévu pour être inclus dans un logement de service (67) qui accueille une connexion de fluide pour le conduit de fluide flexible (23), une connexion électrique pour l'extrémité extérieure du câble caché (12) et une ouverture entrée/sortie (68) du tube (10), des moyens ayant été prévus de manière à ce que le poussoir (59) puisse être activé par l'utilisateur au moyen du logement de service (67) pour désaccoupler le frein à cliquet d'enroulage du tube (10).
